Europäisches Patentamt

European Patent Office

Office européen des brevets

(19)

(11) EP 1 353 211 A2

(12) **EUROPEAN PATENT APPLICATION**

(43) Date of publication:
15.10.2003 Bulletin 2003/42

(51) Int Cl.⁷: **G02B 21/22**, G02B 21/24

(21) Application number: 03251983.7

(22) Date of filing: 28.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.03.2002 JP 2002092349**

(71) Applicant: **National Institute of Advanced Industrial Science and Technology Tsukuba-shi, Ibaraki 305-8564 (JP)**

(72) Inventor: **Ohba, Kohtaro, Nat. Inst. of Advanced Industrial Tsukuba-shi, Ibaraki 305-8564 (JP)**

(74) Representative:
**Cross, Rupert Edward Blount et al BOULT WADE TENNANT, Verulam Gardens 70 Gray's Inn Road London WC1X 8BT (GB)**

(54) **Three-dimensional transmission type microscope system, image display method and image processing apparatus**

(57)    A three-dimensional transmission type microscope system includes a transmission type micro scope; and an image processing apparatus which processes a pixel signal obtained as RGB signals and an in-focus degree signal from the transmission type micro scope, the image processing apparatus having a memory and a processing unit, wherein the in-focus degree signal and a transparent signal are related to each other and stored in the memory, the in-focus degree signal is converted into the transparent signal, and an image pixel signal is generated for displaying an image on a screen by the processing unit.

FIG. 1

EP 1 353 211 A2

**Description**

Technical Field of the Invention

This invention relates to a three-dimensional transmission type microscope system and a three-dimensional image display method thereof.

Background of the Invention

A microscope has been used for an operation such as manipulation of a gene or cell, or an assembly of a micro machine in recent years. It is necessary for the operator to bring the microscope into focus on an object in many instances since the operator looks at the object via a lens. Thus, the operator brings the microscope into focus on the object by manually changing the focal distance of the microscope in a vertical direction. The three-dimensional shape of the object is put in operator's mind by the operator who observes the image of each part of the object which is obtained by the focal adjustment. The operator works on the object relying on the shape of the object built in his mind.

However, since this work requires time and a great labor, the efficiency of the operation is low, and considerable burden is on the operator. Moreover, the skill of the operator is also required in order to do such an operation.

When a person looks at things by his naked eyes, he automatically focuses his eyes on the things located near and far from him. This is because these eyes function as a variable focal mechanism and the focused images of the things located far from or near him are automatically synthesized by his brain.

An all-focal microscope attracts attentions as a microscope which is in the focus in an entire view without the focusing operation by the human being's eyes. As such an all-focus microscope, a microscope which focuses on an object by mechanically moving a lens is known conventionally.

Since in a conventional image-processing system, NTSC video signals from a camera is input in a PC (a computer) successively by an ADC and the image data is stored in a memory provided in the PC, even if it uses video signals of an interlace, it is impossible to take in data at more than 30 frame/sec frame rate.

A vision chip has been developed in order to accelerate an image input and processing in recent years. Specifically, development of the C-MOS vision chip which can read an arbitrary area on an image device is performed briskly.

There are the following types of vision chips:

(1) Single ADC Architecture;
(2) Column Parallel ADC Architecture; and
(3) Pixel Parallel ADC Architecture

In the vision chip (1), the structure of the vision system is based on a PC, and has a problem that a sufficient band for data transmission cannot be secured.

The vision chips (2) and (3), have high data transmission band and high processing ability since image information can be taken in the system in parallel.

Since especially the vision chip (3) has the super parallel processing ability, data is transmitted and processed at a high-speed, but since the vision chip (3) has not crossed the stage of a trial production yet, it is difficult to secure sufficient image resolution.

Furthermore, in Japanese Laid Open Patent No. H06-308118 (1994), a cell positioning method is disclosed. The method comprises a step of, by a television camera, observing a light image reflected from and transmitted to cells which emit fluorescence by giving fluorescein, and cells which do not emit fluorescence by giving fluorescein, observing these objects by using fluorescence microscope, scanning the object by a TV camera, distinguishing the cells which emit fluorescence, from the cells which do not emit fluorescence by binary processing of light image reflected from the scanned cells and storing the binary fluorescence image of the cells which emit fluorescence in a frame memory, storing the binary data of the cells that emit fluorescence in a frame memory and overlaying the fluorescence image and transmission light image on a monitor or displaying these images side by side on the monitor.

Summary of the Invention

In view of foregoing, it is an object of the present invention to obtain an all-focal image and depth image.

It is another object of the present invention to provide a three-dimensional transmission microscope system and a three-dimensional transmission microscope image display method for vividly displaying on the screen a 3 dimensional image including an image of the inside of an object (sample).

In Japanese Patent Application No. 2001-100594 (or International Publication No. WO 02/082805), an all-focal microscope that displays an all-focal image as a motion picture at a high frame rate is disclosed by the inventor of this application. The real time all-focal microscope camera disclosed in the application above provides an all-focal image that is excellent in real time nature (live nature) as if observed directly by human eyes.

When the all-focal image is obtained, although it is also important to input an image and to accelerate processing, in order to display an image of a sample in real time or almost real time, it is necessary to display the image vividly on the a screen.

Thus, a series of images obtained while focal distance of a microscope is changed have been used to obtain the all-focal image.

In this embodiment, in addition to RGB signals (3 channels), an IQM image (signal) indicating in-focus degree in each pixel position at each focal distance is used to obtain an all-focal image (or images) and a depth image (or images). (That is, 4 channels of RGB+IQM are used to obtain the all-focal image.)

Partial space frequency analysis of a picture is performed in the position in a certain picture, moving optical distance (the picture distance x, the object distance X, or a focal length f).

The peak of the frequency obtained by the local space frequency analysis about an image within a certain area while the focal distance is changed, indicates that the image is in focus. By analyzing the peak frequency, the image in focus at each focal distance is identified and synthesized.

Simultaneously, the depth image can be obtained from an object distance X in the place where each portion is in focus.

That is, an all-focal image is generated by gathering up only in-focus portions from two or more images obtained while changing the optical distance, and the depth image generated from the object distance X at which the good portions are captured at that time.

On the other hand, the technology which displays the inside of an object by four channels of RGBP (the transparency P of the object is added to the RGB 3 channels of each slice image of the object) is used as volume rendering technology which displays three-dimensional Computer Graphic. For example, a P value of glass is high, an opaque object is set as a low P value, and frosted glass in the middle.

By relating, in the look-up table (a memory means, or memory storage) , in-focus degree IQM and the transparency P used for the volume rendering technology, it is possible to display a volume rendering image based on a series of images obtained while the focal distance is changed. Thereby, it is possible to observe the inside of the object like an MRI image. Furthermore, it is possible to display slice images in an arbitrary direction such as a vertical or horizontal direction but not limited to these directions).

It is possible to observe a gene, functional protein, etc. by a transmission type fluorescence microscope. Especially at the present when DNA and RNA analysis is progressed to some extent, since it is known that the protein structure greatly affects functions of enzyme etc., functional structure analysis is advanced.

In the case of this fluorescence microscope, in the above-mentioned algorithm, it is possible to observe the three-dimensional structure of the fluorescent substance by relating the fluorescence degree, instead of the in-focus degree, to the transparency P.

According to the present invention, a three-dimensional transmission type microscope system has a transmission type micro scope, and an image processing apparatus which processes a pixel signal obtained as RGB signals and an in-focus degree signal from the transmission type micro scope, the image processing apparatus having a memory and a processing unit, wherein the in-focus degree signal and a transparent signal are related to each other and stored in the memory, the in-focus degree signal is converted into the transparent signal, and image pixel signal is generated for displaying an image on a screen by the processing unit.

Further, according to the present invention, a three-dimensional transmission type microscope system including a transmission type micro scope and an image-processing apparatus which processes RGB signals and an in-focus degree signal obtained from the transmission type micro scope, the three-dimensional transmission type microscope system, wherein the in-focus degree signal is converted into a transparent signal, and an image signal for display is generated based on the RGB signals and the transparent signal.

Still further, according to the present invention, a three-dimensional transmission type microscope system including a transmission type fluorescence micro scope and an image-processing apparatus which processes RGB signals and an in-focus degree signal obtained from the transmission type fluorescence micro scope, the three-dimensional transmission type microscope system, wherein the RGB signals and the in-focus degree signal are stored, the stored in-focus degree signal is converted into a transparent signal, and an image signal for display is generated based on the RGB signals and the transparent signal.

In case that optical parameters such as parameters of a microscope object lens are available, it is possible to display a more clear volume rendering image, by removing out-of-focus elements from an image obtained at each focal distance by using de-convolution technique (that is computer simulation technology for removing out-of-focus elements from an image). In such a case, since it would take time to process all the date, the volume rendering image may be displayed off line.

Furthermore, according to the present invention, a transmission type fluorescence microscope system in which excitation light is emitted on a sample, fluorescent light excited from the sample by the excitation light is observed, the transmission type fluorescence microscope system includes a fluorescence microscope, a processing unit, wherein while focal distance is changed, RGB signals and an in-focus degree signal are obtained, and a plurality of depth images comprising all-focal images are generated from the RGB signals and the in-focus degree signal obtained by fluorescence excited by excitation light which transmits inside the sample, the image processing unit converts the in-focus degree signal into a transparency signal, an image signal is generated by the RGB signals and the transparency signal, and a depth image comprising all-focal image is generated to display the inside of the sample.

Further, according to the present invention, an image display method for displaying an image by processing RGB signals and an in-focus degree signal obtained from the 3-dimensiional transmission type microscope, the image display method comprising, steps of storing, with respect to fluorescence image, the RGB signals and the in-focus degree signal from, converting the in-focus degree signal to a transparency signal, and forming an image signal for display, by the transparency signal and the RGB channel signals.

Furthermore, according to the present invention, an image display method for displaying an image by processing RGB signals and an in-focus degree signal obtained from the 3-dimensiional transmission type fluorescence microscope, the image display method comprising, steps of storing, the RGB signals and the in-focus degree signal fluorescence image obtained from the fluorescence transmission type microscope, converting the in-focus degree signal to a transparency signal, and forming an image for display, by the transparency degree signal and the RGB channel signals.

In the image display method, the image for display may be refreshed 3 to 4 times for neuron reaction time of human's brain.

According to the present invention, an image display method for displaying an image of protein by processing RGB signals and an in-focus degree signal obtained from a transmission type fluorescence microscope, the image display method comprising, steps of changing a focal distance of the transmission type fluorescence microscope to the protein, generating a plurality of transmission images comprising a series of images from the RGB 3 signals and the in focus degree signal, a transparency signal obtained from fluorescence excited by excitation light which transmits an inside of cells of the protein, converting the in-focus degree signal into transparency signal, forming an image to be display by the RGB 3 signals and the transparency signal, displaying an image of the inside of the protein cells.

Lastly, according to the present invention, an image processing apparatus includes a memory for storing an image signal, means for obtaining an in-focus degree signal from the image signal, means for generating a transparent signal based on the in-focus degree signal; and means for generating display image signals for a three-dimensional image based on the image signals and the transparent signal.


Brief Description of the Drawings

The present inventions will now be described by way of example with reference to the following Figs. in which:

Fig. 1 is a schematic block diagram of three-dimensional transmission type microscope system according to the present invention;
Fig. 2 is a functional block diagram mainly showing the function of a real time all-focal microscope;
Fig. 3 is a timing chart showing scan-timing of a high-speed photography camera;
Fig. 4 is a schematic view explaining the structure and an operation of a camera sensor and camera output circuit of the high-speed photography camera;
Fig. 5 is a schematic functional block diagram explaining functions performed in an image-processing equipment;
Fig. 6 is a diagram showing a method of creating fluorescence image data;
Fig. 7 is a flow chart showing an operation of the system according to the present invention;
Fig. 8 shows a series of microscope images taken while a focal distance is changed;
Fig. 9 is a three-dimensional microscope image on which volume rendering was performed.


Preferred Embodiments of the Invention

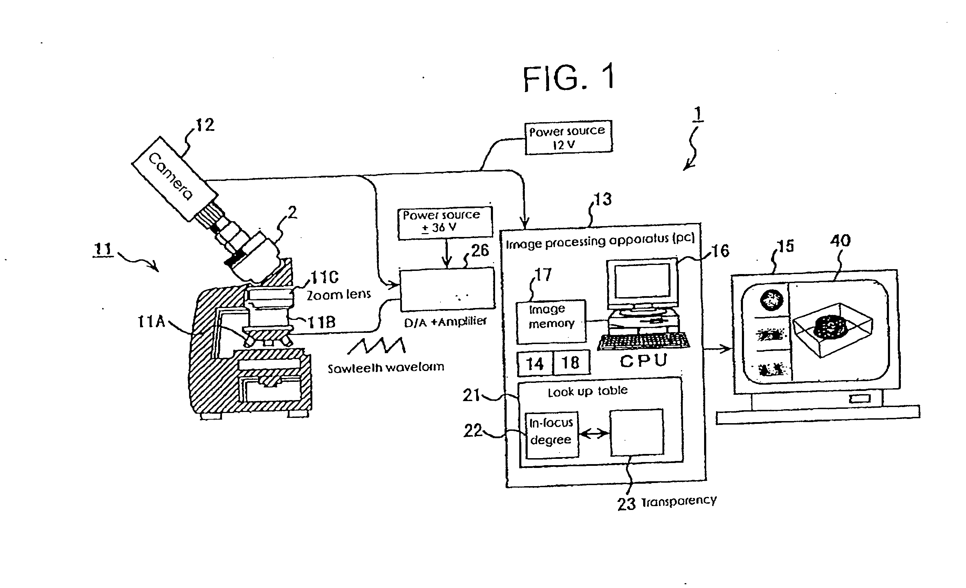

An embodiment of the present invention is described based on Figs. 1-6 below.

Fig. 1 is a schematic block diagram of a three-dimensional transmission type microscope system according to the present invention.

The transmission type microscope 2 has an optical system 11 that receives reflected light from an object OB, and a high-speed scanning camera 12 (that comprises the camera head of the transmission type microscope 2)d as a high-speed scanning device to which the optical system 11 is attached.

An image processing apparatus 13, connected to the three-dimensional transmission type microscope 2, takes in data scanned by the high-speed scanning camera 12, processes at high speed, and generates all-focal images.

The image processing apparatus 13 connected to an image display device 15 has a CPU as a processing equipment 16 and an image memory 17. A display device of the processing apparatus 16 may be used as the image display device 15. In this embodiment, both image display device 15 and processing apparatus 16 are shown in the Fig. 1 for convenience.

The image processing apparatus 13 has a RGB output board 14 which performs color processing to the all-focal images that the image processing apparatus 13 has generated, and an in-focus degree output board 18 that is used with the RGB output board 14.

Moreover, the microscope is equipped with a focal distance changing device 26. The optical system 11 has a variable focal mechanism 11A and micro zoom lens(es) 11C and a lighting system 11B.

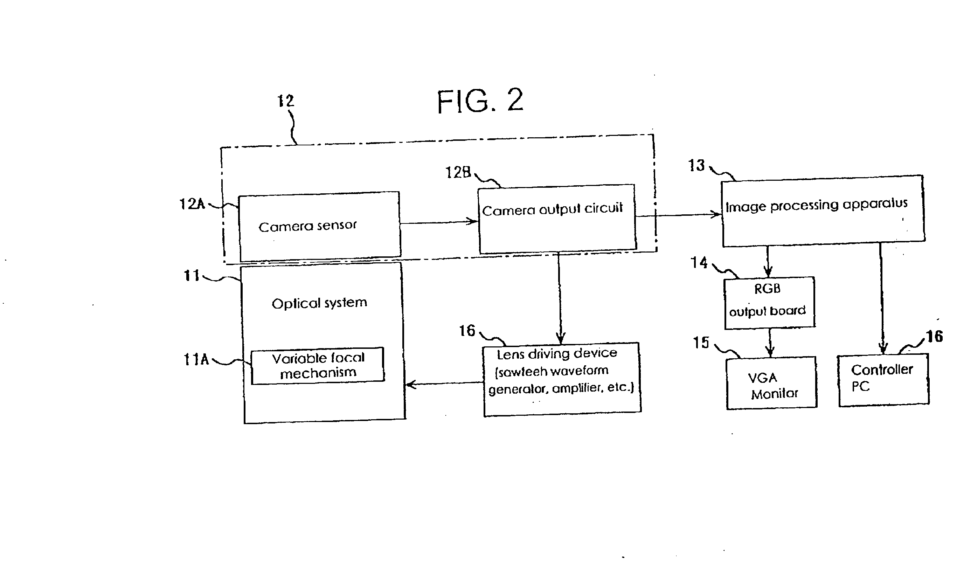

In Fig. 2, a functional block diagram mainly showing function of the three-dimensional transmission type microscope system 1 is shown.

The high-speed scanning camera 12 is equipped with a camera sensor 12A and a camera output circuit 12B that processes an output signal of the camera sensor 12.

As mentioned above, the optical system 11 is equipped with the variable focal mechanism 11A positioning the optical system 11 in order from the side near the object OB, the lighting system 11B, and the zoom lens 11C.

The variable focal mechanism 11A is provided on the lighting system 11B which is provided on the macro zoom lens 11C. Thereby, the variable focal mechanism system which changes the original optical characteristic (focal distance) of a macro zoom lens at a high speed is acquired.

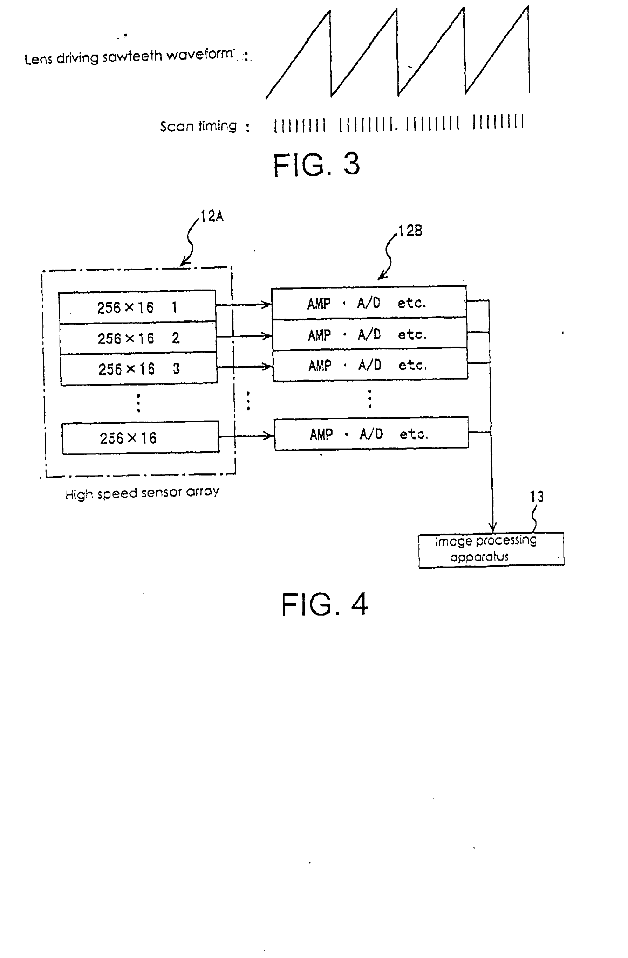

As mentioned above, Fig. 3 is a timing chart showing driving timings at which the focal distance changing device 16 drives the variable focal mechanism 11A.
It is controlled to photo (scan) the object OB eight (8) times for every focal distance synchronizing with a 30Hz sawtooth waveform, as shown in Fig. 3.

The sawtooth wave is generated by the focal distance changing device 26 using the synchronized signal sent from the camera output circuit 12B of the high-speed scanning camera 12.

Since there is hysteresis characteristic in the variable focal mechanism 11A, the hysteresis is surely reset for every waveform (every scanning).

Before the high-speed scanning camera 12 is described, the various techniques of the high-speed scanning method are described below.

The frame rate of the high-speed scanning camera is usually increased by one of the following methods or the combination thereof:

(1) accelerating a reading speed of a sensor;
(2) reducing the number of reading pixels which raises the reading clock of one sensor; and
(3) parallelizing reading pixels.

Although in the first method, it is easy to understand improvement in the speed of pixel rate theoretically, there is a limit in the improvement in the speed from the characteristic of a sensor device, or the conditions of a circumference circuit.

Moreover, in the second method, the technique of reducing the number of reading pixels is accomplished by, for example, reading by only 250 x 250 pixels by a sensor which can read 500 x 500 pixels by 30 frames and progressing to the next frame. In the method it is possible to speed up 4 times as fast as 500 x 500 pixels scanning, which can create additional 120 (= 30 x 4) frames. In this case, resolution becomes low.

In the third method, the Parallelization of the reading pixel is performed in various modes.

For example, there is the technique of parallelizing the high-speed image sensor itself, thereby parallelizing a pixel area which forms the scanning area.

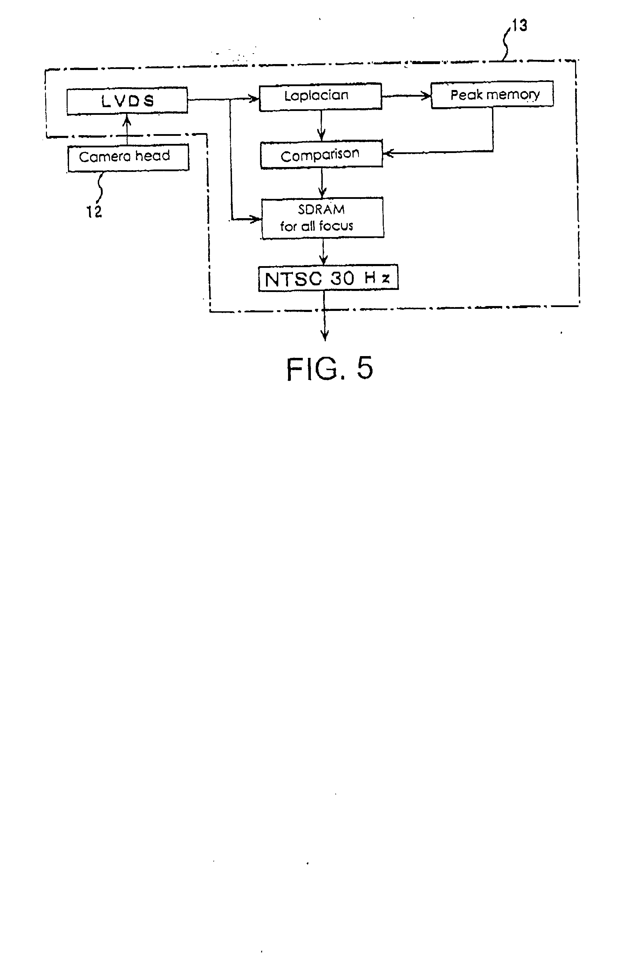

For example, as shown in Fig. 4, the high-speed camera ("ULTIMA" Series manufactured by Photron Ltd.) has an array of 16 independent high-speed sensors (each of which has 16 x 256 pixels) that are in parallel arranged, and these sensors forms a scanning area of 256 x 256 pixels as a whole. Each high-speed sensor is read at 25 MHz.

In this embodiment, the third technique of parallelization mentioned above is used for the camera sensor 12A of the high-speed scanning camera 12.

As shown in Fig. 4, the high-speed image sensors for scanning are provided in an arrangement of array.

In addition, this high-speed scanning camera 12 may consist of the 2nd technique mentioned above or the combination of the 2nd and the 3rd techniques.

In addition, as the 3rd technique for parallelization of pixels to be read, there are various modes in addition to the system in that two or more high-speed sensors are arranged at the form of an array as mentioned above.

As one example, a pixel area (for example, 256 x 256 pixels) of one sheet forming a scanning area can be divided vertically and horizontally into two or more areas(for example, four areas), and pixel data can be simultaneously read in parallel from each divided area, thereby the system can accelerate reading speed.

Moreover, as another example, the pixel data for two or more lines (for example, two lines: each line, for example, comprises 256 pixels) from the pixel area of one sheet is simultaneously read in parallel, and this operation is performed one by one about all lines, thereby the system can accelerate reading speed.

Furthermore, as another example, pixel data can be simultaneously and in parallel read from two or more pixels (for example, 10 pixels) from a line (for example, 256 pixels) which constitutes the pixel area of one sheet, thereby the system can accelerate reading speed by repeating this operation successively about the line and remaining lines.

The camera output circuit 12B is equipped with the processing circuit section equipped with circuits, such as an amplifier, a CDS (Correlated Double Sampling) circuit, and an A/D converter, corresponding to each sensor in addition to a clock generator.

For this reason, in the camera output circuit 12B, image data from the camera sensor 12A is amplified, CDS-processed, and digitized for every processing circuit section.

Data outputted from this camera output circuit 12B is transmitted to the image processing apparatus 13 by the LVDS (Low Voltage Differential Signaling) method.

The image processing apparatus 13 comprises of hardware logic based on a high-speed mass FPGA (Field Programmable Gate Array).

This image processing apparatus 13 includes an FPGA, mass SDRAM, and an LVDS interface on its board, and can interface with external apparatuses.

The value of in-focus degree IQM (Image Quality Measure) is evaluated for every pixel of the image data taken in by the image-processing apparatus 13 while moving the focal distance of variable focal mechanism 11A.

The IQM is explained below.

The IQM is based on the optical theory called "Depth from Focus" theory. (Refer to, for example, Masahiro Watanabe and Shree K. Nayer, "*Minimal Operator Set for Passive Depth from Defocus*," CVPR '96, pp.431-438 (1996), Shree K.Nayer, Masahiro Watanabe, and Minoryu Noguchi, "*Real-Time Focus Range Sensor*," ICCV '95, pp.995-1001, (1995), Shree K.Nayer, and Yasuo Nakagawa, "*Shape from Focus*," IEEE Trans. on PAMI, Vol.16, No.8, pp.824-831 (1994), A.P. Pentland, "*A New Sense for Depth of Field*", IEEE Trans. On Pattern Analysis and Machine Intelligence, Vol. PAMI-9, No.4, pp.523-531, (1987), Michio Miwa, Tomoyuki Oohara, Masahiko Ishii, Yasuharu Koike, and Makoto Sato, "A *Method of Far Object Recognition using Depth from Focus,"* Proc. 3D Image Conference '99, pp.305-307 (1999), and etc.)

According to this "Depth from Focus" theory, whether it is in focus is decided by local space frequency analysis of that image, that is, it is decided that it is in focus at the focal distance at which the frequency reaches to its peak.

It is intuitively inferred that portions which are out of focus have low frequency and portions which are in focus have high frequency.

Images are captured one by one as focal distance of the lens is changed by the variable focal mechanism 11A. The local space frequency analysis of each picture is performed about the image, and the image portion having the peak of frequency, i.e., the in-focus portion (or portions) is taken up from each image in a pixel unite, and these image portions extracted are synthesized as a sheet of an image, thereby, an all-focal image is obtained.

Moreover, the three-dimensional data of the object OB which is reflected in the all-focal picture is also obtained at those focal distances.

The local space frequency analysis of each pixel can be evaluated by spatial distribution of an image density shade value defined by IQM (Image Quality Measure) of the following formula:

$$IQM = \frac{1}{D} \sum_{x=xi}^{xf} \sum_{y=yi}^{yf} \left\{ \sum_{p=-Lc}^{Lc} \sum_{q=-Lr}^{Lr} |I(x,y) - I(x+p, y+q)| \right\} \qquad (1)$$

Here, (-Lc, -Lr) - (Lc, Lr) and $(x_i, y_i)$ - $(x_f, y_f)$ represent the small areas for performing distribution evaluation and smoothing, respectively.

D represents the number of all the pixels which is evaluated for normalizing them per pixel.

Therefore, as the focal distance is changed by the variable focal mechanism 11A, the value of IQM is evaluated for each pixel or each area, the peak of an IQM value is detected, and the object distance X then computed from the pixel shade value f and the image distance x is substituted for the matrix element to each pixel position, respectively.

After this processing is performed at each focal distance, each matrix becomes an all-focal image and a depth picture.

If this processing of IQM is simplified, it will become a Laplacian 8-dir filter and a 2 x 2 smoothing filter.

As shown in Fig. 5, it is possible to simplify such image processing by the image processing apparatus 13.

That is, in a Laplacian circuit, analysis of space frequency is performed as to the 80MHz image signal sent from the high-speed scanning camera 12, and the result of the analysis is recorded on a peak memory.

The output of the Laplacian circuit, is compared with a reference value or peak value stored in the peak memory, and if it is the peak value, i.e., the image is in focus, it is recorded in the frame memory in SDRAM. The other outputs data is deleted.

Thus, the processed image data stored in the SDRAM is sent in the form of standard NTSC signals at frame rate 30Hz, to the monitor (image display device) 15 through the RGB output board 14, and is displayed as a real time all-focal image.

Moreover, the three-dimensional data which consists of a focal distance is converted to LVDS, and is transmitted to the processing equipment 16.

Thus, in this embodiment, a camera image can be obtained by the three-dimensional transmission type microscope which is a real time all-focal type, and an operator does not need to imagine the three-dimensional shape of an object in mind.

Since the entire view is in focus, it is not necessary to change the focal distance of the camera. And a "live (real time)" image is obtained. That is, there is little delay to display the image within a viewer, and a motion is almost real-timely viewed as it is. Thereby, the efficiency of work is improved sharply by using the microscope camera.

As compared with the conventional all-focal microscope cameras using a system with which the focus of a lens is adjusted mechanically, the validity of the all-focal microscope camera is conspicuous.

Since in the conventional all-focus microscope, an operation of adjusting a focus mechanically, and a subsequent processing operation in the conventional case are necessary, it takes several seconds to several minutes to obtain one screen.

Although a still image is obtained by using a 30 frame conventional video camera, the live motion picture was impossible.

Since an operation while looking into a microscope is delayed where an image is refreshed only once at several seconds, actual work using such a microscope is almost impossible.

The frame frequency of a motion picture which a person can regard as one without breaks is 30 or more frames per second. The frame taking-in speed of the real time all-focal microscopes according to the present invention is 240 frames/second. That is, since a focus is continuously changed 8 times for 1/30 seconds, taking in images, the taking-in speed is 240 (= 30 x 8) frames/second.

Thereby, it is possible to secure the real time nature as if the person looks at things ordinarily (without a microscope).

Moreover, although a person can look at things with a real time all focus in the world of a normal size, it is necessary to, in the micro world, use a real time single focus microscope. For this reason, in an operation using the conventional microscope, the operator is required complicated motions to adjust a focus. These real time all-focal microscope cameras according to the present invention enables it to treat the micro world like the world of the ordinary size.

Moreover, in the conventional operation, since a single focus microscope is used, it is required to prepare a section of a thing in order to see the thing under a microscope. In some cases, the section is not required if the all-focal microscope according to the present invention is used.

Furthermore, motions of the very small micro machine and ecology observation of the micro living things which have not been seen until now is also attained with these real time all-focal microscope cameras.

Next, by using data of four channels of RGB+IQM which is added the IQM image indicating an in-focus degree in each pixel position at each focal distance to the image (in the case of a color three channels of RGB), a series of processing is performed about all-focal images (images that are in focus anywhere), and depth images, that is, images of the inside of an object, to display the images.

The technology which displays the inside of an object by four channels of RGBP which added transparency P of the object to 3 RGB channels of each slice image is used as volume rendering technology which displays three-dimensional CG.

For example, a P value of glass is high, an opaque object is set as a low P value, and frosted glass has a middle value.

As shown in Fig. 1, by relating, in the look-up table 21 (a memory means, or memory storage), in-focus degree IQM 22 and the transparency P 23 used for volume rendering technology, it is possible to display volume rendering images, based on a series of images obtained while the focal distance is changed. Thereby, it is possible to observe the inside of the object like an MRI image. Furthermore, it is possible to display the slice image in the arbitrary direction (such as a vertical direction or horizontal direction but not limited to these directions).

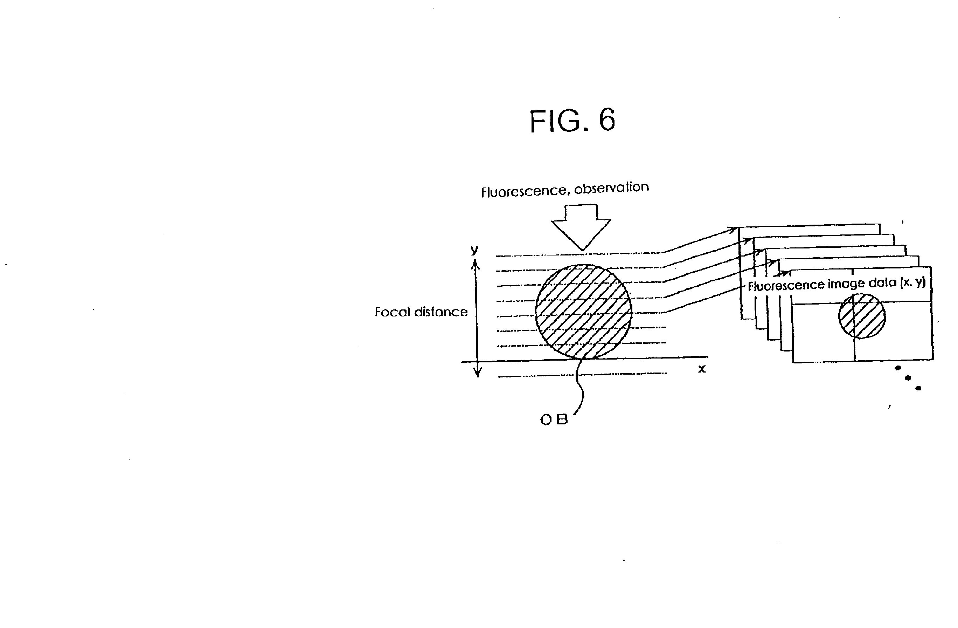

As shown in Fig. 6, if a transmission type fluorescence microscope emits light of a certain wavelength on an object OB (a sample), fluorescence image data (x y) corresponding to focal distances is obtained. Thereby, it is possible to observe a gene, functional protein, etc.

Especially at the present when DNA and RNA analysis is progressed to some extent, since it is known that the protein structure greatly affects functions of enzyme etc., functional structure analysis is advanced.

In the case of this fluorescence microscope, in the above-mentioned algorithm, it is possible to observe the three-dimensional structure of the fluorescent substance by relating the objective degree of fluorescence instead of in-focus degree to the transparency P.

For example, where neuron reaction of human's brain is observed in real time, three to four images are refreshed during neuron reaction time (3 to 4 milliseconds).

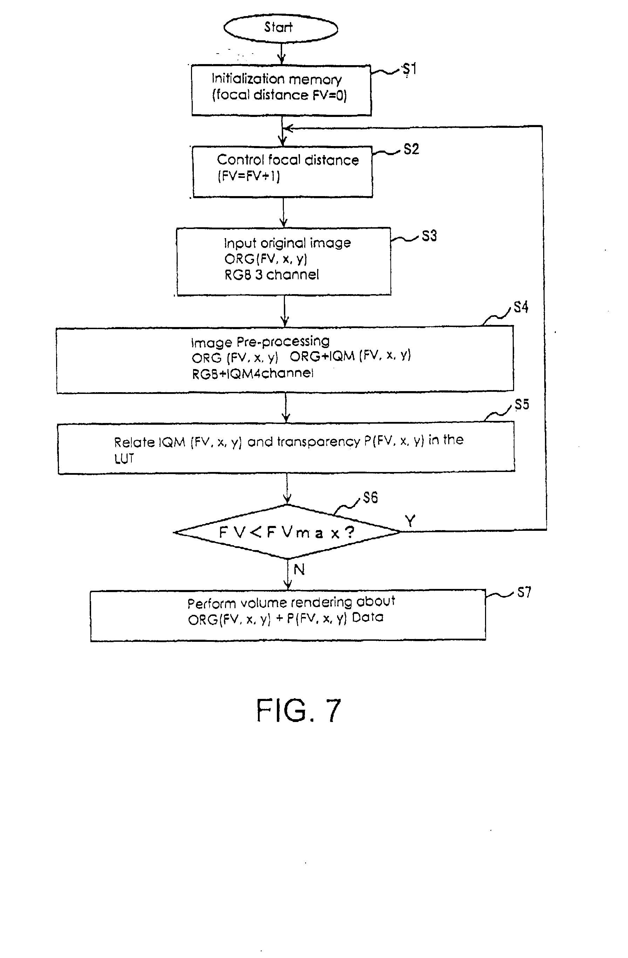

A flow chart is shown in Fig. 7.

Memory initialization (focal distance FV = 0) is performed (S1). Focal distance control (FV = FV + 1) is performed (S2), and an original image ORG of the RGB 3 channel (FV, x, y) is generated (S3).

An IQM channel is added to the three RGB and image pretreatment by four channels is performed (S4).

$$ORG(FV, x, y) \rightarrow ORG + IQM (FV, x, y)$$

IQM (FV, x, y) and Transparency P (FV, x, y) are related to each other in look-up table 21 LUT (S5). It is determined if FV < FVmax (S6). If FV is less than FVmax, a focal distance is changed and the above-mentioned step is repeated.

If FV is more than FVmax, a volume rendering is performed about ORG(FV, x, y) + P(FV, x, y) data (S7), and an image is displayed on the screen display.

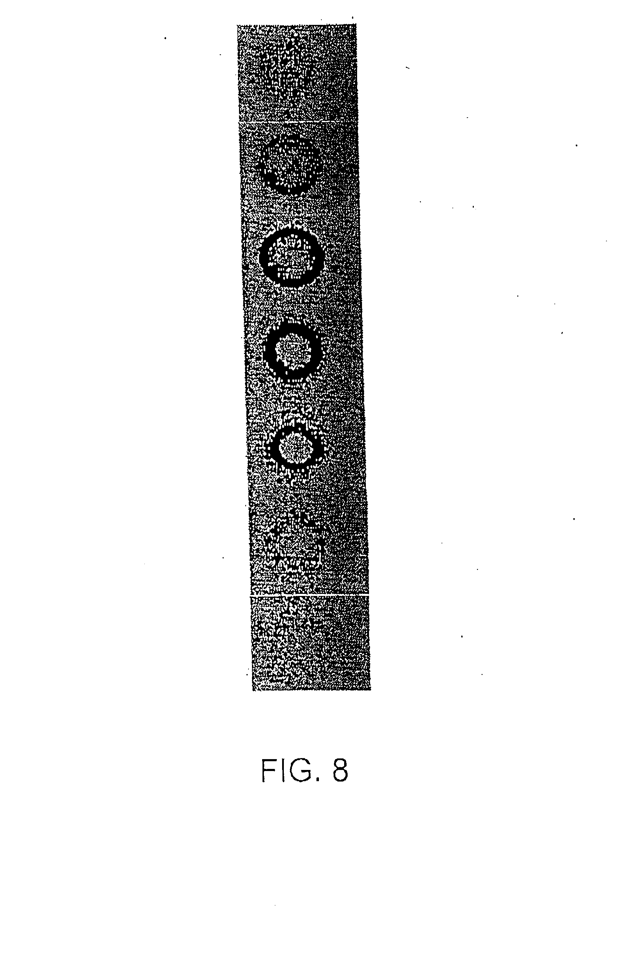

Fig. 8 shows sliced images obtained while the focal distance was changed.

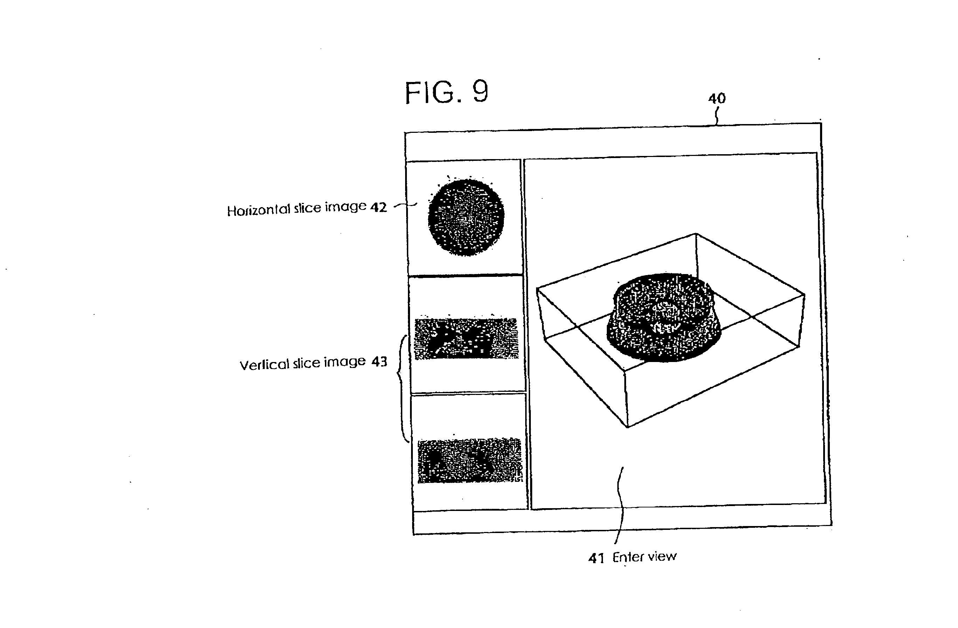

In Fig. 9, like an MRI image, the entire view 41 of a three-dimensional microscope image to which volume rendering is performed, is shown on the display screen 40.

Also, the horizontal slice image 42 and vertical slice image 43 are shown on the display screen 40.

As mentioned above, according the present invention, as mentioned above, the three-dimensional transmission type microscope system comprises the transmission type microscope and an image processing apparatus which carries out image processing of a pixel signal of the image obtained by the transmission type microscope. In the three-dimensional transmission type microscope, the above-mentioned pixel signal outputted as RGB channel signals and a channel signal of in-focus degree from the transmission type microscope are stored in the memory or memories. A transparent channel signal is generated based on the stored channel signal of in-focus degree, and forms a pixel signal together with the RGB channel signals to display an image on the display screen.

Further, in another embodiment of the present invention, a three-dimensional transmission type microscope system comprises a transmission type fluorescence microscope and an image-processing apparatus which carries out image processing of the pixel signal of the image obtained by the transmission type fluorescence microscope.

In the three-dimensional transmission type microscope, with respect to a fluorescence image, the pixel signal outputted as RGB channel signals and a channel signal of in-focus degree from the transmission type microscope are stored in a memory or memories. A transparent signal is generated based on the stored channel signal of in-focus degree, and forms a pixel signal together with the RGB channel signals to display an image on a display screen.

Further, in still another embodiment according to the present invention, a transmission type fluorescence microscope system used for observation of fluorescence excited from an object by excitation light comprises a transmission type fluorescence microscope and image processing apparatus wherein focal distance to the object is controlled, and a depth image consist of an all-focal image of fluorescence excited by excitation light which transmits inside the object are formed by a pixel signal comprising RGB 3 channel signals and a channel signal of in-focus degree. The image processing apparatus converts the in-focus degree channel signal into transparent channel signal by using the generated the pixel signal thereby the pixel signal for the screen display is formed by the RGB 3 channel signals and the transparent signal and further, a depth image consisting of all-focal image is generated to display the inside of the object by the pixel signal on the screen display.

Furthermore, in a further embodiment of the present invention, an image display method of a three-dimensional transmission type microscope comprises steps of storing, with respect to fluorescence image, the pixel signal outputted as RGB channel signals and a channel signal of in-focus degree from the transmission type microscope; generating transparent signal based on the stored channel signal of in-focus degree; and forming a pixel signal by the channel signal of in-focus degree and the RGB channel signals to display an image on a display screen.

Furthermore, since calcium flow is used for judgment of an active state when the activity of a nerve cell which performs electric activity is observed by using fluorescein, it attracts people's attention in the field of nerve biology.

However, since in addition to the structure being-like three-dimensional, activity is very a short time (several or less microseconds), a high-speed analysis equipment is called for.

In case that optical parameters such as parameters of a microscope object lens are available, it is possible to display a more clear volume rendering image, by removing out-of-focus elements from an image obtained at each focal distance by using de-convolution technique (that is computer simulation technology for removing out-of-focus elements from an image). In such a case, since it would take time to process all the date, the volume rendering image may be displayed off line.

In the present system, such a demand is satisfied by using a high-speed image-processing system and a high-speed camera as an image sensor.

Furthermore, in still further embodiment, an image display method for displaying an image of the protein (crystal) by processing a pixel signal of the image obtained from a transmission type fluorescence microscope comprises steps of controlling and changing focal distance to the protein, forming a plurality of transmission images consisting of a series of images from pixels consisting of RGB 3 channel signals and a transparent channel signal by the fluorescence excited by the excitation light which transmits the inside of cells of the protein, converting a channel signal of in-focus degree into a transparent channel signal, generating a pixel signal for display screen by the RGB 3 channel signals and the transparent channel signal, generating and displaying an image of the inside of the protein cells by the pixel signal.

According to the present invention, by the image display method of a three-dimensional transmission type microscope, three to four images are refreshed for neutron reaction time (3 to 4 msec) of human brain on the display screens

According to this invention, the inside of an object (sample) can be clearly displayed by using four channels consisting of RGB channels and P transparency channel based on an image obtained in form of RGB 3 channels and an IQM channel from an object (sample), and the entire view inside an object can be further displayed three-dimensionally like an MRI picture.

Moreover, when a fluorescence microscope is used, fluorescence of an object according to in-focus degree can be related to transparency, and observation of the three-dimensional structure of a fluorescent substance is attained.

Although only some exemplary embodiments of this invention have been described in detail above, those skilled in the art will readily appreciated that many modifications are possible in the exemplary embodiments without materially departing from the novel teachings and advantages of this invention. Accordingly, all such modifications are intended to be included within the scope of this invention.

**Claims**

1. A three-dimensional transmission type microscope system comprising:

   a transmission type micro scope; and
   an image processing apparatus which processes a pixel signal obtained as RGB signals and an in-focus degree signal from the transmission type micro scope, the image processing apparatus having a memory and a processing unit,
      wherein the in-focus degree signal and transparent signal are related to each other and stored in the memory,
   the in-focus degree signal is converted into the transparent signal, and
   image pixel signal is generated for displaying an image on a screen by the processing unit.

2. A three-dimensional transmission type microscope system including a transmission type micro scope and an image-processing apparatus which processes RGB signals and an in-focus degree signal obtained from the transmission type micro scope, the three-dimensional transmission type microscope system,
      wherein the in-focus degree signal is converted into transparent signal, and
      an image signal for display are generated based on the RGB signals and the transparent signal.

3. A three-dimensional transmission type microscope system including a transmission type fluorescence micro scope and an image-processing apparatus which processes RGB signals and an in-focus degree signal obtained from the transmission type fluorescence micro scope, the three-dimensional transmission type microscope system,
      wherein the RGB signals and the in-focus degree signal are stored,
      the stored in-focus degree signal is converted into a transparent signal, and
      an image signal for display is generated based on the RGB s and the transparent signal.

4. A transmission type fluorescence microscope system in which excitation light is emitted on a sample, fluorescent light excited from the sample by the excitation light is observed, the transmission type fluorescence microscope system comprising:

a fluorescence microscope;
a processing unit;
wherein while focal distance is changed, RGB signals and an in-focus degree signal are obtained, and a plurality of depth images comprising all-focal images are generated from the RGB signals and the in-focus degree signal obtained by fluorescence excited by excitation light which transmits inside the sample;
the image processing unit converts the in-focus degree signal into a transparency signal,
an image signal is generated by the RGB signals and the transparency signal, and
a depth image comprising all-focal image is generated to display the inside of the sample.

5. An image display method for displaying an image by processing RGB signals and an in-focus degree signal obtained from the 3-dimensiional transmission type microscope, the image display method comprising, steps of:

storing, with respect to fluorescence image, the RGB signals and the in-focus degree signal from;
converting the in-focus degree signal to a transparency signal; and
forming an image signal for display, by the transparency signal and the RGB channel signals.

6. An image display method for displaying an image by processing RGB signals and an in-focus degree signal obtained from the 3-dimensiional transmission type fluorescence microscope, the image display method comprising, steps of:

storing, the RGB signals and the in-focus degree signal fluorescence image obtained from the fluorescence transmission type microscope;
converting the in-focus degree signal to a transparency signal; and
forming an image for display, by the transparency degree signal and the RGB channel signals.

7. The image display method according to claim 6, wherein the image for display is refreshed 3 to 4 times for neuron reaction time of human's brain

8. an image display method for displaying an image of protein by processing RGB signals and an in-focus degree signal obtained from a transmission type fluorescence microscope, the image display method comprising, steps of:

changing a focal distance of the transmission type fluorescence microscope to the protein,
generating a plurality of transmission images comprising a series of images from the RGB 3 signals and the in focus degree signal
a transparency signal obtained from fluorescence excited by excitation light which transmits an inside of cells of the protein,
converting the in-focus degree signal into a transparency signal,
forming an image to be display by the RGB 3 signals and the transparency signal,
displaying an image of the inside of the protein cells.

9. An image processing apparatus comprising:

means for obtaining image signals at plural focal points;
at least one memory for storing the image signals;
means for obtaining in-focus degree signals from the image signals;
means for relating at least one transparent signal to the in-focus signals; and
means for generating at least one display image signal for a three-dimensional image based on the image signals, the at least one in-focus degree signal and the at least one transparent signal.

# FIG. 1

Camera 12

2

11

11C
Zoom lens

11A

11B

Sawteeth waveform

Power source
12 V

1

Power source
± 36 V

26

D/A +Amplifier

13

Image processing apparatus (pc) 16

17

Image
memory

14  18

CPU

21

22

Look up table

In-focus
degree

23 Transparency

15  40

EP 1 353 211 A2

# FIG. 2

EP 1 353 211 A2

Lens driving sawteeth waveform :

Scan timing : |||||||| |||||||| ||||||||| |||||||||

## FIG. 3

High speed sensor array

| 256 × 16   1 |
| 256 × 16   2 |
| 256 × 16   3 |
| 256 × 16 |

AMP · A/D etc.
AMP · A/D etc.
AMP · A/D etc.
AMP · A/D etc.

Image processing apparatus

## FIG. 4

FIG. 5

# FIG. 6

Fluorescence, observation

Focal distance

y

x

Fluorescence image data (x, y)

O B

EP 1 353 211 A2

FIG. 7

FIG. 8

FIG. 9

Horizontal slice image 42

Vertical slice image 43

41 Enter view

40

EP 1 353 211 A2